# EUROPEAN PATENT SPECIFICATION

(11) **EP 4 561 878 B1**
(45) Date of publication and mention of the grant of the patent: **27.05.2026**
(21) Application number: 23758150.9
(22) Date of filing: 26.07.2023
(51) Int. Cl.: B60T 8/40, B60T 11/20, B60T 13/66, B60T 13/68, B60T 13/74

(54) **MODULAR BRAKING SYSTEM FOR A MOTOR VEHICLE**
MODULARES BREMSSYSTEM FÜR EIN KRAFTFAHRZEUG
SYSTÈME DE FREINAGE MODULAIRE POUR VÉHICULE AUTOMOBILE

(30) Priority: 26.07.2022 US 202263392352 P
(43) Date of publication of application: 04.06.2025
(73) Proprietor: AUMOVIO Systems, Inc., Auburn Hills, MI 48326 (US)
(72) Inventor: HAGEN, Kyle, Auburn Hills, Michigan 48326 (US); BEAVER, Robert Charles, Auburn Hills, Michigan 48326 (US); MORRISON, Chad Howard, Auburn Hills, Michigan 48326 (US)
(74) Representative: Aumovio Corporation
(86) International application number: PCT/US2023/071010
(87) International publication number: WO 2024/026342

(56) References cited:
- US-A- 5 246 283
- US-A1- 2017 072 927
- US-A1- 2023 174 032

## Description

### TECHNICAL FIELD

The invention relates to a braking system for a motor vehicle.

### BACKGROUND

Current state of the art for the heavy-duty passenger trucks use electronic brake systems with a hydro-boost system and an ESC module. The hydro-boost module is similar to a vacuum booster in a smaller passenger car but instead of a vacuum it uses higher pressure fluid from the steering system to amplify driver brake pressure. Slip control is handled by a separate ESC module. However, fully by-wire system are not known.

US 5 246 283 A discloses a braking system for a motor vehicle comprising a first electrohydraulic actuator connected to a first fluidly actuated wheel brake, a controller for the first electrohydraulic actuator, and a second electrohydraulic actuator connected to a second fluidly actuated wheel brake.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One general aspect includes a first electrohydraulic braking system with a first at least one hydraulically operated wheel brake. The first electrohydraulic braking system also includes a first control unit for the first braking system. The system also includes a first low pressure accumulator connected to the first electrohydraulic braking system. The system also includes a second electrohydraulic braking system with a second at least one hydraulically operated wheel brake. The system also includes a second control unit for the second braking system. The system also includes a second low pressure accumulator connected to the second electrohydraulic braking system. The system also includes where the first electrohydraulic braking system is fluidly independent from the second electrohydraulic braking system.

Other embodiments of this aspect include corresponding computer systems, apparatus, and computer programs recorded on one or more computer storage devices, each configured to perform the actions of the methods.

### BRIEF DESCRIPTION OF THE DRAWINGS

The present disclosure will become more fully understood from the detailed description and the accompanying drawings, wherein:
Figure 1 is a partial schematic representation of a first embodiment of an exemplary braking system; and
Figure 2 is a partial schematic representation of a second embodiment of the exemplary braking system.
Figure 3 is a partial schematic representation of a third embodiment of the exemplary braking system.

### DETAILED DESCRIPTION

In the following, similar or identical characteristics are marked with the same reference signs.

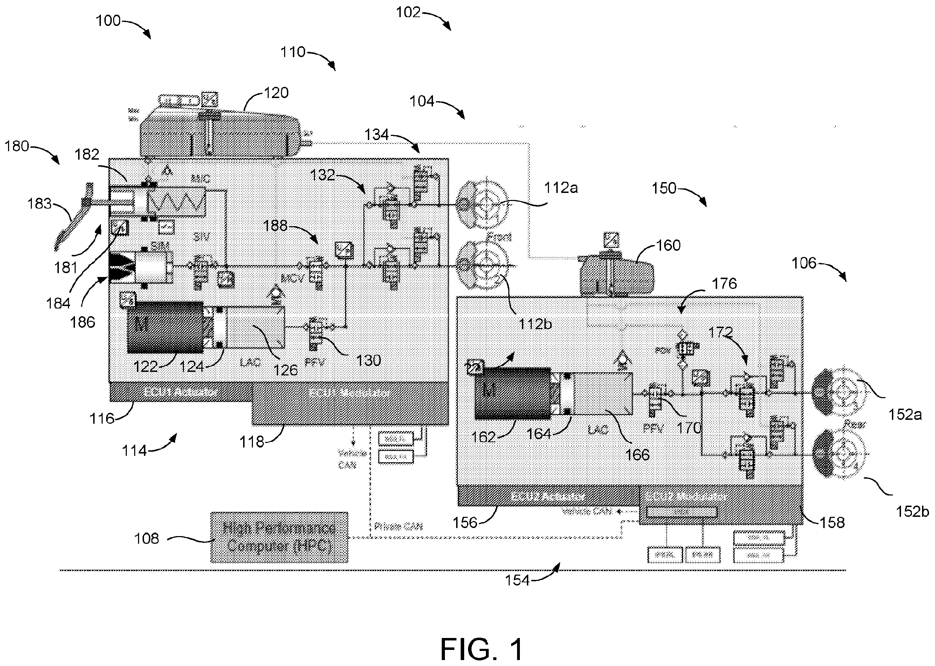

Figure 1 shows a modular vehicle braking system 102 for a motor vehicle 100 with a first electrohydraulic braking system 110 and a second electrohydraulic braking system 150.

The first electrohydraulic braking system 110 has hydraulically operated wheel brakes 112a and 112b, which act on the wheels of first axle 104 of the motor vehicle 100. The wheel brakes 112a and 112b may be hydraulically operated disc brakes for example. The wheel brakes 112a and 112b are applied in active operation of the brake system 110 with a hydraulic brake pressure, which is translated by the wheel brakes 112a and 112b into a braking force acting on the respective vehicle wheels assigned to the wheel brakes 112a and 112b based on a brake control signal received at a first electronic control unit (ECU) 114 for the first braking system 110. The first braking system 110 has a first ECU actuator 116 to generate hydraulic brake pressure based on the brake control signal received by the first ECU 114. The first braking system 110 has a first ECU modulator 118 to modulate the hydraulic pressure from the first ECU actuator 116 to the brakes 112a and 112b. Brake fluid for the wheel brakes 112a and 112b is provided from a first low pressure accumulator 120.

Likewise, the second electrohydraulic braking system 150 has hydraulically operated wheel brakes 152a and 152b, which act on the wheels of a second axle 106 a motor vehicle. The wheel brakes 152a and 152b may be hydraulically operated disc brakes for example. The wheel brakes 152a and 125b are applied in active operation of the brake system 150 with a hydraulic brake pressure, which is translated by the wheel brakes 152a and 152b into a braking force acting on the respective vehicle wheels assigned to the wheel brakes 152a and 152b based on a brake control signal received at a second ECU 154 for the second braking system 150. The second braking system 150 has a second ECU actuator 156 to generate hydraulic brake pressure based on the brake control signal received by the second ECU 154. The second braking system 150 has a second ECU modulator 158 to modulate the hydraulic pressure from the second ECU actuator 156 to the brakes 152a and 152b. Brake fluid for the wheel brakes 152a and 152b is provided from a second low pressure accumulator 1160 for the second braking system 150. The second low pressure accumulator 160 may be fluidly connected to the first low pressure accumulator 120.

The first and second electrohydraulic braking systems 110, 150 operate in a similar manner to one another. Both the first and second electrohydraulic braking systems 110, 150 receive the brake control signal generated by a vehicle controller 1108, but operation of the first and second electrohydraulic braking systems 110, 150 is primarily independent of one another, as described herein. Additionally, the first and second braking system 110 and 150 are hydraulically independent of one another. The first braking system 110 is not directly connected to the second braking system 150. In fact, the first braking system 110 and the second braking system 150 may only indirectly and independently be connected via the low pressure accumulators 120 and 160.

However, the first control unit 114 is designed to exchange information with the second control unit 154 in both a normal operating mode and a fall back operating mode. This may be for example actuation information, applied brake pressures or braking forces or other operating information of the respective first and second electrohydraulic braking system 110, 150.

In a normal operation mode the first electrohydraulic braking system 110 receives the brake control signal from the vehicle controller 108. The first actuator 116 includes a motor 122 to drive a piston 124 withinin a hydraulic cylinder 126. The piston 124 is connected to the motor 122 in such a way that a rotation of a drive shaft of the motor 122 translates the piston 124 within the cylinder 126. Therefore, the electric motor 122 is translated into a translation of the pressure piston 124 in the hydraulic cylinder 126, whereby a brake fluid located in the hydraulic cylinder 126 can be pressed with a pressure. The rotational position of a rotor of the electric motor 122 and thus the current position of the pressure piston 124 in the hydraulic cylinder 126 is monitored by a motor position sensor.

The hydraulic cylinder 126 of the first actuator 116 is also hydraulically connected to the first modulator 118, wherein between the the first modulator 118 and the hydraulic cylinder 126 of the first actuator 116 a currentless closed pressure supply valve 130, i.e. a pressure feed valve (PFV) is arranged. The pressure supply valve 130 can therefore establish or interrupt a hydraulic connection between the first actuator 116 and the the first modulator 118.

Therefore, the wheel brakes 112a and 112b are applied in active operation of the first electrohydraulic brake system 110 with a hydraulic brake pressure, which is translated by the wheel brakes 112a and 112b into a braking force acting on the respective vehicle wheels assigned to the wheel brakes 112a and 112b.

The first modulator 118 portion of the first braking system 110 has a currentless open intake valve 132 and a currentless closed exhaust valve 134 per connected hydraulically operated wheel brake 112a and 112b. The exhaust valves 134 are designed to establish or interrupt a hydraulic connection between the wheel brakes 112a and 112b and the low pressure accumulator 120, so that a hydraulic brake pressure applied in the wheel brakes 112a and 112b can be reduced via the exhaust valves 134. At the same time, by selectively opening and closing the intake valves 132, the hydraulic brake pressure applied in wheel brakes 112a and 112b can be modulated from the applied inlet pressure.

A braking input system 180 may be included in the first braking system 110 or may be separate from the first braking system 110. The braking input system 180 includes a master cylinder 181 with a movable cylinder piston 182 mounted in the master cylinder 181. The cylinder piston 182 can be moved by actuating an actuation pedal 183 connected to the cylinder piston 182 in the master cylinder 181, or a brake fluid located in the master cylinder 181 can be pressurized with a hydraulic pressure. The hydraulic pressure generated here is detected by a pressure sensor 184. Furthermore, the displacement distance of the cylinder piston 182 is determined by a displacement sensor. The master cylinder 181 is hydraulically connected initially to a pedal feeling simulator 186. A brake control signal is generated by a vehicle controller 108 based on the movement of the pedal 183. The brake control signal is sent to each of the first and second control units 114, 154 of the first and second electrohydraulic braking systems 110, 150.

The braking input system 180 is also connected to the first braking system 110 with a master cylinder valve 188. The master cylinder valve 188 is normally closed and is opend to provide brake control in a fallback mode for the first braking system 110. In a normal operation mode the first braking system 110 operates in a by-wire manner based on the brake control signal.

Alternatively, the braking input system 180 can be independent of the first braking system 110 and still provide the brake control signal to the first and second control units 114, 154 of the first and second electrohydraulic braking systems 110, 150.

The first control unit 114 is also connected to a parking brake system 190 which includes a parking brake switch 192, so that when the parking brake switch 192 is pressed, a corresponding information can be processed by the first control unit 114. The first control unit 114 is then designed to transmit a corresponding control information for activating the parking brake function.

In a normal operation mode the second electrohydraulic braking system 150 receives the brake control signal from the vehicle controller 108. The second actuator 156 includes a motor 162 to drive a piston 164 withinin a hydraulic cylinder 166. The piston 164 is connected to the motor 162 in such a way that a rotation of a drive shaft of the motor 162 translates the piston 164 within the cylinder 166. Therefore, the electric motor 162 is translated into a translation of the pressure piston 164 in the hydraulic cylinder 166, whereby a brake fluid located in the hydraulic cylinder 166 can be pressed with a pressure. The rotational position of a rotor of the electric motor 162 and thus the current position of the pressure piston 164 in the hydraulic cylinder 166 is monitored by a motor position sensor.

The hydraulic cylinder 166 of the second actuator 156 is also hydraulically connected to the second modulator 158, wherein between the the second modulator 158and the hydraulic cylinder 166 of the second actuator 156 a currentless closed pressure supply valve 170 is arranged. The pressure supply valve 170 can therefore establish or interrupt a hydraulic connection between the second actuator 156 and the the second modulator 158.

Therefore, the wheel brakes 152a and 152b are applied in active operation of the second electrohydraulic brake system 150 with a hydraulic brake pressure, which is translated by the wheel brakes 152a and 152b into a braking force acting on the respective vehicle wheels assigned to the wheel brakes 152a and 152b.

The second modulator 158 portion of the second braking system 150 has a currentless open intake valve 172 and a currentless closed exhaust valve 174 per connected hydraulically operated wheel brake 152a and 152b. The exhaust valves 174 are designed to establish or interrupt a hydraulic connection between the wheel brakes 152a and 152b and the low pressure accumulator 160, so that a hydraulic brake pressure applied in the wheel brakes 152a and 152b can be reduced via the exhaust valves 174. At the same time, by selectively opening and closing the intake valves 172, the hydraulic brake pressure applied in wheel brakes 152a and 152b can be modulated from the applied inlet pressure. Additionally, there is a pressure decrease valve (PDV) 176 located between the second modulator 158 and the second low pressure accumulator 160 for overpressure protection.

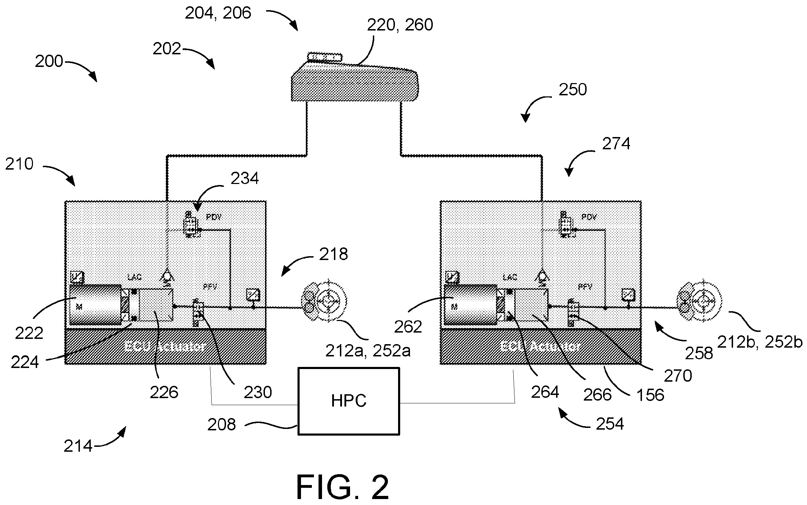

Figure 2 illustrates a partial schematic view of a second embodiement of a modular vehicle braking system 202 for a motor vehicle 200 with a first electrohydraulic braking system 210, 250 and a second electrohydraulic braking system 250.

The first electrohydraulic braking system 210, 250 has hydraulically operated wheel brakes 212a, 212b, 252a, and 252b, which act on the wheels of first axle 204 of the motor vehicle 200. The second electrohydraulic braking system 210, 250 has hydraulically operated wheel brakes 252a and 252b, which act on the wheels of second axle 206 of the motor vehicle 200.

The wheel brakes 212a, 212b, 252a, and 252b may be hydraulically operated disc brakes for example. The wheel brakes 212a, 212b, 252a, and 252b are applied in active operation of the brake system 210, 250 with a hydraulic brake pressure, which is translated by the wheel brakes 212a, 212b, 252a, and 252b into a braking force acting on the respective vehicle wheels assigned to the wheel brakes 212a, 212b, 252a, and 252b based on a brake control signal received at a electronic control unit (ECU) 214, 254 for the braking system 210, 250. The braking system 210, 250 has an ECU actuator 216, 256 to generate hydraulic brake pressure based on the brake control signal received by the ECU 214, 254. The braking system 210, 250 has an ECU modulator 218, 258 to modulate the hydraulic pressure from the ECU actuator 216, 256 to the brakes 212a, 212b, 252a, and 252b. Brake fluid for the wheel brakes 212a, 212b, 252a, and 252b is provided from a low pressure accumulator 220, 260. There is one low pressure accumulator 220, 260 for the wheel brakes 212a, 212b, 252a, and 252b at each axle 204, 206. The low pressure accumulator 260 for the rear axle may be fluidly connected to the low pressure accumulator 220 of the front axle.

The electrohydraulic braking systems 210, 250 receive a brake control signal generated by a vehicle controller 208, but operation of the first and second electrohydraulic braking systems 210, 250, 250 is primarily independent of one another, as described herein. Additionally, the first and second braking system 210, 250 and 250 are hydraulically independent of one another. The first braking system 210 is not directly connected to the second braking system 250. In fact, the first braking system 210 and the second braking system 250 may only indirectly and independently be connected via the low pressure accumulators 220 and 260 at each axle.

However, the first control unit 214 is designed to exchange information with the second control unit 254 in both a normal operating mode and a fall back operating mode. This may be for example actuation information, applied brake pressures or braking forces or other operating information of the respective first and second electrohydraulic braking system 210, 250.

In a normal operation mode the electrohydraulic braking system 210, 250 receives the brake control signal from the vehicle controller 208. The actuator 216, 256 includes a motor 222, 262 to drive a piston 224, 264 withinin a hydraulic cylinder 226, 266. The piston 224, 268 is connected to the motor 222, 262 in such a way that a rotation of a drive shaft of the motor 222, 262 translates the piston 224, 268 within the cylinder 226, 266. Therefore, the electric motor 222, 262 is translated into a translation of the pressure piston 224, 264 in the hydraulic cylinder 226, 266, whereby a brake fluid located in the hydraulic cylinder 226, 266 can be pressed with a pressure. The rotational position of a rotor of the electric motor 222, 262 and thus the current position of the pressure piston 224, 264 in the hydraulic cylinder 226, 266 is monitored by a motor position.

The hydraulic cylinder 226, 266 of the actuator 216, 256 is also hydraulically connected to the modulator 218, 258, wherein between the the modulator 218, 258 and the hydraulic cylinder 226, 266 of the actuator 216, 256 a currentless closed pressure supply valve 230, 270 is arranged. The pressure supply valve 230, 270 can therefore establish or interrupt a hydraulic connection between the actuator 216, 256 and the the modulator 218, 258. Additionally, there is a pressure decrease valve (PDV) 232, 272 located between the the modulator 218, 258 and the low pressure accumulator 220, 260 for overpressure protection.

Therefore, the wheel brakes 212a, 212b, 252a, and 252b are applied in active operation of the electrohydraulic brake system 210, 250 with a hydraulic brake pressure, which is translated by the wheel brakes 212a, 212b, 252a, and 252b into a braking force acting on the respective vehicle wheels assigned to the wheel brakes 212a, 212b, 252a, and 252b.

A braking input system (not shown) and a parking brake system (not shown) may be separate from the braking systems 210, 250 and operate in a similar manner as described in Fig. 1.

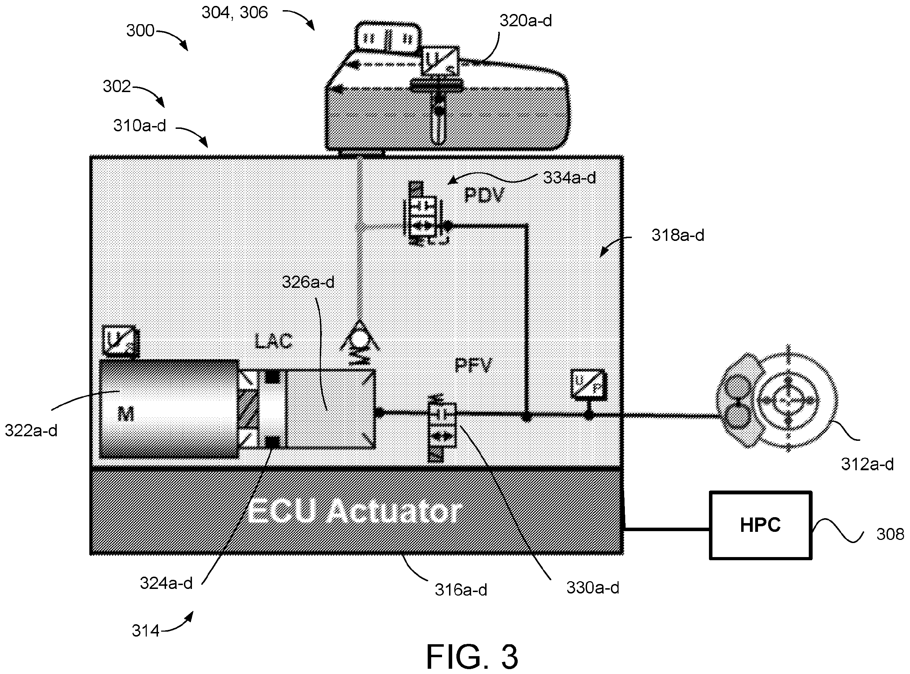

Figure 3 llustrates a partial schematic view of a third embodiement of a modular vehicle braking system 302 for a motor vehicle 300 with at least a first though fourth electrohydraulic braking system 310a-d. Each electrohydraulic braking system 310a-d acts upon a hydraulically operated wheel brakes 312a-d each respectively arranged as a corner braking unit for the vehicle 300.

The wheel brakes 312a-d may be hydraulically operated disc brakes for example. The wheel brakes 312a-d are applied in active operation of the brake system 310a-d with a hydraulic brake pressure, which is translated by the wheel brakes into a braking force acting on the respective vehicle wheels assigned to the wheel brakes 312a-d based on a brake control signal received at a n electronic control unit (ECU) 314a-d for the braking system 310a-d. The braking system 310a-d has an ECU actuator 316a-d to generate hydraulic brake pressure based on the brake control signal received by the ECU 314a-d. The braking system 310a-d has an ECU modulator 318a-d to modulate the hydraulic pressure from the ECU actuator 316a-d to the brakes 312a-d. Brake fluid for the wheel brakes 312a-d is provided from a low pressure accumulator 320a-d. There is one low pressure accumulator 320a-d for each of the wheel brakes 312a-d fluidly independent of one another. Alternatively, the low pressure accumulators 320a-d may be fluidly connected to one another or the low pressure accumulators 320a-d may be fluidly connected only to the other low pressure accumulator 320a-d at the same axle.

The electrohydraulic braking systems 310a-d receive a brake control signal generated by a vehicle controller 308, but operation of the first and second electrohydraulic braking systems 310a-d is primarily independent of one another, as described herein. Additionally, the braking systems 310a-d are hydraulically independent of one another. The braking systems 310a-d are not directly connected to one another. In fact, the braking systems 310a-d may only indirectly and independently be connected via the low pressure accumulators 320a-d at each corner.

However, the control units 314a-d are designed to exchange information with one another in both a normal operating mode and a fall back operating mode. This may be for example actuation information, applied brake pressures or braking forces or other operating information of the respective electrohydraulic braking systems 310a-d.

In a normal operation mode the electrohydraulic braking system 310a-d receives the brake control signal from the vehicle controller 308. The actuator 316a-d includes a motor 322a-d to drive a piston 324a-d withinin a hydraulic cylinder 326a-d. The piston 324a-d is connected to the motor 322a-d in such a way that a rotation of a drive shaft of the motor 322a-d translates the piston 324a-d within the cylinder 326a-d. Therefore, the electric motor 322a-d is translated into a translation of the pressure piston 324a-d in the hydraulic cylinder 326a-d, whereby a brake fluid located in the hydraulic cylinder 326a-d can be pressed with a pressure. The rotational position of a rotor of the electric motor 322a-d and thus the current position of the pressure piston 324a-d in the hydraulic cylinder 326a-d is monitored by a motor position sensor.

The hydraulic cylinder 326a-d of the actuator 316a-d is also hydraulically connected to the modulator 318a-d, wherein between the the modulator 318a-d and the hydraulic cylinder 326a-d of the actuator 316a-d a currentless closed pressure supply valve 330a-d is arranged. The pressure supply valve 330a-d can therefore establish or interrupt a hydraulic connection between the actuator 316a-d and the the modulator 318a-d.. Additionally, there is a pressure decrease valve (PDV) 332a-d located between the the modulator 318a-d and the low pressure accumulator 320a-d for overpressure protection.

Therefore, the wheel brakes 312a-d are applied in active operation of the electrohydraulic brake system 310a-d with a hydraulic brake pressure, which is translated by the wheel brakes 312a-d into a braking force acting on the respective vehicle wheels assigned to the wheel brakes 312a-d.

A braking input system (not shown) and a parking brake system (not shown) may be separate from the braking systems 310a-d and operate in a similar manner as described in Fig. 1.

Referring to Figures 1-3, current by-wire brake systems are usually connected to all four wheels of the vehicle. This brake system distributes actuators into separate brake systems on either : hydraulic brake circuits for example at each axle, or hydraulic brake wheels. Domain control is provided per product but these distributed systems could be controlled centrally through a master processing unit 108 which may be a high performance computer. When one brake system loses power or leaks, information is sent to the other control units and operation is still able to continue on with the performance of the remaining units. Power is provided redundantly across all of the units, being careful to not introduce single point failures which can disrupt complete braking performance.

The modular vehicle braking system 102, 202, 302 provides redundancy since multiple actuators can still remain operational even if one were to fail. The modular vehicle braking system 102, 202, 302 provides improvided performance since multiple actuators can supply brake pressure faster than a single large actutor. The modular vehicle braking system 102 allows for component downsizing, by having more actuators, each actuator can be reduced in size. Additionally, the hydraulic supply required to provide operation of the vehicle braking system 102, 202, 302 is overall reduced by the use of multiple actuators and independent hydraulic operation of the modular braking systems.

The foregoing description shall be interpreted as illustrative and not be limited thereto. One of ordinary skill in the art would understand that certain modifications may come within the scope of this disclosure. Although the different non-limiting embodiments are illustrated as having specific components or steps, the embodiments of this disclosure are not limited to those combinations. Some of the components or features from any of the non-limiting embodiments may be used in combination with features or components from any of the other non-limiting embodiments. For these reasons, the appended claims should be studied to determine the true scope and content of this disclosure.

## Claims

1. A braking system (102, 202, 302) for a motor vehicle (300) comprising:
a first electrohydraulic braking system (110, 210, 310a) with a first at least one hydraulically operated wheel brake (112a, 112b, 212a, 212b, 312a);
a first control unit (114, 214, 314a) for the first braking system (110, 210, 310a);
a first low pressure accumulator (120, 220, 320a) connected to the first electrohydraulic braking system (110, 210, 310a);
a second electrohydraulic braking system (150, 250, 312b) with a second at least one hydraulically operated wheel brake (152a, 152b, 252a, 252b, 312b);
**characterized in that** it comprises a second control unit (154, 254, 354b) for the second braking system (150, 250, 350b);
a second low pressure accumulator (160, 260, 320b) connected to the second electrohydraulic braking system (150, 250, 312b); and
wherein the first electrohydraulic braking system (110, 210, 310a) is fluidly independent from the second electrohydraulic braking system (150, 250, 312b).

2. The braking system (102, 202, 302) of claim 1, wherein the first control unit (114, 214, 314a) comprises a first actuator (116, 216, 316a) and a first modulator (118, 218, 318a) and the second control unit (154, 254, 314b) comprises a second actuator (156, 256, 316b) and second modulator (158, 258, 318b).

3. The braking system (102, 202, 302) of claim 1, wherein the first at least one wheel brake is a first wheel brake (112a) of a first axle (104, 204) of the vehicle (100, 200, 300) and a second wheel brake (112b) of the first axle (104, 204) and wherein the second at least one wheel brake (112a, 112b, 152a, 152b) is a first wheel brake (152a) of a second axle (106, 206) and a second wheel brake (152b) of the second axle (106, 206).

4. The braking system (102, 202, 302) of claim 1, wherein the first low pressure accumulator (120, 220, 320a) is fluidly connected to the second low pressure accumulator (160, 260, 320b).

5. The braking system (102, 202, 302) of claim 1, wherein the first control unit (114, 214, 314a) and second control unit (154, 254, 314b) each receive a brake demand from a vehicle controller (108, 208, 308).

6. The braking system (102, 202, 302) of claim 5, further comprising a braking input system (180) connected to the vehicle controller (108, 208, 308)to generate the brake demand.

7. The braking system (102, 202, 302) of claim 1, wherein the braking input system (180) is part of the first braking system (110, 210, 310a).

8. The braking system (102, 202, 302) of claim 7, wherein the first braking system (110, 210, 310a) is actuated via a master cylinder valve (188) valve in a fall back mode.

9. The braking system (102, 202, 302) of claim 1, further comprising:
a third electrohydraulic braking system (310c) with a third at least one hydraulically operated wheel brake (312c);
a third control unit for the third braking system (310c);
a third low pressure accumulator (320c) connected to the third electrohydraulic braking system (310c);
a fourth electrohydraulic braking system (310d) with a fourth at least one hydraulically operated wheel brake (312d);
a fourth control unit for the fourth braking system (310d);
a fourth low pressure accumulator (320d) connected to the fourth electrohydraulic braking system (310d); and
wherein the first, second, third and fourth electrohydraulic braking systems (310a-d) are fluidly independent from one another.

10. The braking system (102, 202, 302) of claim 9, wherein the first control unit (314a), second control units (314b), third control unit (314c) and fourth control unit (314d) each receive a brake demand from a vehicle (308) controller.

11. The braking system (102, 202, 302) of claim 1, wherein the first control unit (114, 214, 314a) and second control unit (154, 254, 314b) are designed to provide the electromechanical pressure supply device tor generation of a hydraulic brake pressure by the electromechanical pressure supply device as a function of at least one of: a determined displacement of a piston (182) in the master cylinder (181), a hydraulic pressure generated by the master cylinder (181), an actuation angle of the actuation pedal (183), a function of an actuation path of the actuation pedal (183), and depending on a force acting on an accelerator pedal.

## Patentansprüche

1. Bremssystem (102, 202, 302) für ein Kraftfahrzeug (300), umfassend:
ein erstes elektrohydraulisches Bremssystem (110, 210, 310a) mit einer ersten mindestens einen hydraulisch betätigten Radbremse (112a, 112b, 212a, 212b, 312a);
eine erste Steuereinheit (114, 214, 314a) für das erste Bremssystem (110, 210, 310a);
einen ersten Niederdruckspeicher (120, 220, 320a), der mit dem ersten elektrohydraulischen Bremssystem (110, 210, 310a) verbunden ist;
ein zweites elektrohydraulisches Bremssystem (150, 250, 312b) mit einer zweiten mindestens einen hydraulisch betätigten Radbremse (152a, 152b, 252a, 252b, 312b);
**dadurch gekennzeichnet, dass** es eine zweite Steuereinheit (154, 254, 354b) für das zweite Bremssystem (150, 250, 350b) umfasst;
einen zweiten Niederdruckspeicher (160, 260, 320b), der mit dem zweiten elektrohydraulischen Bremssystem (150, 250, 312b) verbunden ist, und
wobei das erste elektrohydraulische Bremssystem (110, 210, 310a) von dem zweiten elektrohydraulischen Bremssystem (150, 250, 312b) fluidunabhängig ist.

2. Bremssystem (102, 202, 302) nach Anspruch 1, wobei die erste Steuereinheit (114, 214, 314a) einen ersten Aktuator (116, 216, 316a) und einen ersten Modulator (118, 218, 318a) umfasst und die zweite Steuereinheit (154, 254, 314b) einen zweiten Aktuator (156, 256, 316b) und einen zweiten Modulator (158, 258, 318b) umfasst.

3. Bremssystem (102, 202, 302) nach Anspruch 1, wobei die erste mindestens eine Radbremse eine erste Radbremse (112a) einer ersten Achse (104, 204) des Fahrzeugs (100, 200, 300) und eine zweite Radbremse (112b) der ersten Achse (104, 204) ist und wobei die zweite mindestens eine Radbremse (112a, 112b, 152a, 152b) eine erste Radbremse (152a) einer zweiten Achse (106, 206) und eine zweite Radbremse (152b) der zweiten Achse (106, 206) ist.

4. Bremssystem (102, 202, 302) nach Anspruch 1, wobei der erste Niederdruckspeicher (120, 220, 320a) mit dem zweiten Niederdruckspeicher (160, 260, 320b) fluidverbunden ist.

5. Bremssystem (102, 202, 302) nach Anspruch 1, wobei die erste Steuereinheit (114, 214, 314a) und die zweite Steuereinheit (154, 254, 314b) jeweils eine Bremsanforderung von einer Fahrzeugsteuerung (108, 208, 308) empfangen.

6. Bremssystem (102, 202, 302) nach Anspruch 5, ferner umfassend ein Bremseingabesystem (180), das mit der Fahrzeugsteuerung (108, 208, 308) verbunden ist, um die Bremsanforderung zu erzeugen.

7. Bremssystem (102, 202, 302) nach Anspruch 1, wobei das Bremseingabesystem (180) Teil des ersten Bremssystems (110, 210, 310a) ist.

8. Bremssystem (102, 202, 302) nach Anspruch 7, wobei das erste Bremssystem (110, 210, 310a) über ein Hauptzylinderventil (188) in einem Ersatzmodus betätigt wird.

9. Bremssystem (102, 202, 302) nach Anspruch 1, ferner umfassend:
ein drittes elektrohydraulisches Bremssystem (310c) mit einer dritten mindestens einen hydraulisch betätigten Radbremse (312c);
eine dritte Steuereinheit für das dritte Bremssystem (310c);
einen dritten Niederdruckspeicher (320c), der mit dem dritten elektrohydraulischen Bremssystem (310c) verbunden ist;
ein viertes elektrohydraulisches Bremssystem (310d) mit einer vierten mindestens einen hydraulisch betätigten Radbremse (312d);
eine vierte Steuereinheit für das vierte Bremssystem (310d);
einen vierten Niederdruckspeicher (320d), der mit dem vierten elektrohydraulischen Bremssystem (310d) verbunden ist; und
wobei das erste, zweite, dritte und vierte elektrohydraulische Bremssystem (310a-d) fluidunabhängig voneinander sind.

10. Bremssystem (102, 202, 302) nach Anspruch 9, wobei die erste Steuereinheit (314a), die zweite Steuereinheit (314b), die dritte Steuereinheit (314c) und die vierte Steuereinheit (314d) jeweils eine Bremsanforderung von einer Steuerung eines Fahrzeugs (308) empfangen.

11. Bremssystem (102, 202, 302) nach Anspruch 1, wobei die erste Steuereinheit (114, 214, 314a) und die zweite Steuereinheit (154, 254, 314b) so ausgelegt sind, dass sie die elektromechanische Druckversorgungsvorrichtung zur Erzeugung eines hydraulischen Bremsdrucks durch die elektromechanische Druckversorgungsvorrichtung in Abhängigkeit von mindestens einem von Folgendem versorgen: einer bestimmten Verschiebung eines Kolbens (182) in dem Hauptzylinder (181), einem Hydraulikdruck, der durch den Hauptzylinder (181) erzeugt wird, einem Betätigungswinkel des Betätigungspedals (183), einer Funktion eines Betätigungswegs des Betätigungspedals (183) und in Abhängigkeit von einer Kraft, die auf ein Gaspedal wirkt.

## Revendications

1. Système de freinage (102, 202, 302) pour véhicule automobile (300) comprenant :
un premier système de freinage électrohydraulique (110, 210, 310a) avec au moins un premier frein de roue à actionnement de manière hydraulique (112a, 112b, 212a, 212b, 312a) ;
une première unité de commande (114, 214, 314a) pour le premier système de freinage (110, 210, 310a) ;
un premier accumulateur basse pression (120, 220, 320a) relié au premier système de freinage électrohydraulique (110, 210, 310a) ;
un deuxième système de freinage électrohydraulique (150, 250, 312b) avec au moins un deuxième frein de roue à actionnement de manière hydraulique (152a, 152b, 252a, 252b, 312b) ;
**caractérisé en ce qu'**il comprend une deuxième unité de commande (154, 254, 354b) pour le deuxième système de freinage (150, 250, 350b);
un deuxième accumulateur basse pression (160, 260, 320b) relié au deuxième système de freinage électrohydraulique (150, 250, 312b) ; et
dans lequel le premier système de freinage électrohydraulique (110, 210, 310a) est indépendant fluidiquement du deuxième système de freinage électrohydraulique (150, 250, 312b).

2. Système de freinage (102, 202, 302) selon la revendication 1, dans lequel la première unité de commande (114, 214, 314a) comprend un premier actionneur (116, 216, 316a) et un premier modulateur (118, 218, 318a) et la deuxième unité de commande (154, 254, 314b) comprend un deuxième actionneur (156, 256, 316b) et un deuxième modulateur (158, 258, 318b).

3. Système de freinage (102, 202, 302) selon la revendication 1, dans lequel l'au moins un premier frein de roue est un premier frein de roue (112a) d'un premier essieu (104, 204) du véhicule (100, 200, 300) et un deuxième frein de roue (112b) du premier essieu (104, 204) et dans lequel l'au moins un deuxième frein de roue (112a, 112b, 152a, 152b) est un premier frein de roue (152a) d'un second essieu (106, 206) et un deuxième frein de roue (152b) du second essieu (106, 206).

4. Système de freinage (102, 202, 302) selon la revendication 1, dans lequel le premier accumulateur basse pression (120, 220, 320a) est relié fluidiquement au deuxième accumulateur basse pression (160, 260, 320b).

5. Système de freinage (102, 202, 302) selon la revendication 1, dans lequel la première unité de commande (114, 214, 314a) et la deuxième unité de commande (154, 254, 314b) reçoivent chacune une demande de freinage d'un dispositif de commande de véhicule (108, 208, 308).

6. Système de freinage (102, 202, 302) selon la revendication 5, comprenant en outre un système d'entrée de freinage (180) relié au dispositif de commande de véhicule (108, 208, 308) pour générer la demande de freinage.

7. Système de freinage (102, 202, 302) selon la revendication 1, dans lequel le système d'entrée de freinage (180) fait partie du premier système de freinage (110, 210, 310a).

8. Système de freinage (102, 202, 302) selon la revendication 7, dans lequel le premier système de freinage (110, 210, 310a) est actionné par l'intermédiaire d'une soupape de maître-cylindre (188) dans un mode de secours.

9. Système de freinage (102, 202, 302) selon la revendication 1, comprenant en outre :
un troisième système de freinage électrohydraulique (310c) avec au moins un troisième frein de roue à actionnement de manière hydraulique (312c) ;
une troisième unité de commande pour le troisième système de freinage (310c) ;
un troisième accumulateur basse pression (320c) relié au troisième système de freinage électrohydraulique (310c) ;
un quatrième système de freinage électrohydraulique (310d) avec au moins un quatrième frein de roue à actionnement de manière hydraulique (312d) ;
une quatrième unité de commande pour le quatrième système de freinage (310d) ;
un quatrième accumulateur basse pression (320d) relié au quatrième système de freinage électrohydraulique (310d) ; et
dans lequel les premier, deuxième, troisième et quatrième systèmes de freinage électrohydraulique (310a-d) sont indépendants fluidiquement les uns des autres.

10. Système de freinage (102, 202, 302) selon la revendication 9, dans lequel la première unité de commande (314a), les deuxièmes unités de commande (314b), la troisième unité de commande (314c) et la quatrième unité de commande (314d) reçoivent chacune une demande de freinage d'un dispositif de commande de véhicule (308).

11. Système de freinage (102, 202, 302) selon la revendication 1, dans lequel la première unité de commande (114, 214, 314a) et la deuxième unité de commande (154, 254, 314b) sont conçues pour alimenter le dispositif d'alimentation en pression électromécanique pour la génération d'une pression de freinage hydraulique par le dispositif d'alimentation en pression électromécanique en fonction d'au moins l'un des éléments suivants : un déplacement déterminé d'un piston (182) dans le maître-cylindre (181), une pression hydraulique générée par le maître-cylindre (181), un angle d'actionnement de la pédale d'actionnement (183), une fonction d'un trajet d'actionnement de la pédale d'actionnement (183), et en fonction d'une force agissant sur une pédale d'accélérateur.
